# EUROPÄISCHE PATENTSCHRIFT

(11) **EP 0 885 821 B1**
(45) Veröffentlichungstag und Bekanntmachung des Hinweises auf die Patenterteilung: **14.07.2004**
(21) Anmeldenummer: 98810509.4
(22) Anmeldetag: 03.06.1998
(51) Int. Cl.: B65G 47/244, B65G 47/84, B65B 35/24

(54) **Vorrichtung zum Ausrichten von im Grundriss annähernd rechteckigen Produkten**
Apparatus for aligning products having an approximately rectangular cross-section
Dispositif d'alignement de produits à section appoximativement rectangulaire

(30) Priorität: 16.06.1997 CH 146597
(43) Veröffentlichungstag der Anmeldung: 23.12.1998
(73) Patentinhaber: SIG Pack Systems AG, 8222 Beringen (CH)
(72) Erfinder: Frulio, Ralf, 79798 Jestetten (DE)
(74) Vertreter: Clerc, Natalia

(56) Entgegenhaltungen:
- EP-A- 0 218 550
- EP-A- 0 330 495
- DE-A- 2 346 407
- GB-A- 2 224 986
- US-A- 2 912 093
- US-A- 3 908 332
- US-A- 5 501 316

## Beschreibung

Aus der EP-A-218 550 ist eine Vorrichtung zum Vereinzeln und Zuführen von länglichen Nahrungsmittelprodukten zu einer Verpakkungsmaschine bekannt. Der Vorrichtung werden die Produkte quer zu ihrer Längserstreckung angeliefert. Die Produkte gelangen auf ein erster Paar nebeneinanderliegender, gleichschnell laufender Förderbänder, von welchen sie etwa symmetrisch getragen werden. Vom ersten Bandpaar werden die Produkte an ein zweites Paar nebeneinanderliegender, rascher laufender Förderbänder übergeben, so dass sie vereinzelt werden. Die Übergabestellen sind gegeneinander versetzt, so dass die Produkte zwischen den beiden Stellen gedreht werden. Um eine zuverlässige Vereinzelung zu erreichen und den Drehwinkel konstant zu halten, ist im Bereich der Übergabestellen im Spalt zwischen den nebeneinanderliegenden Bändern eine Saugöffnung angeordnet, mittels welcher die Adhesion der Produkte auf den Bändern erhöht wird. Vom zweiten Bandpaar gelangen die Produkte auf einen mit gleicher Förderrichtung laufendes Ausrichtförderband, auf welchem Sie mittels eines schräg zur Förderrichtung angeordneten Führungsbandes parallel zur Förderrichtung ausgerichtet werden.

Die US-A-2 912 093 zeigt eine weitere derartige Vorrichtung. Im Grundriss ovale Glasflaschen werden in zwei Kolonnen nebeneinander auf zwei gleichschnell laufenden Förderbändern angeliefert. Ein schräg über die beiden Bänder verlaufender Kettenförderer hat Mitnehmer, welche die jeweils zwei gleichzeitig angelieferten Flaschen auf den Bändern erfassen und zu einem Abfuhrförderband als einzige Kolonne transportieren. Die Transportrichtung dieses Bandes verläuft im Winkel zur Transportrichtung der ersten Bänder.

Solche Vorrichtungen sind meistens auf eine bestimmte Produktegrösse und eine bestimmte Art der Ausrichtung ausgelegt und deshalb wenig flexibel in der Anwendung. Der vorliegenden Erfindung liegt die Aufgabe zugrunde, diesen Nachteil zu beseitigen. Diese Aufgabe wird durch eine Vorrichtung zum Ausrichten von im Grundriss annähernd rechteckigen Produkten, insbesondere Schokoladenriegeln, und zur Zufuhr der Produkte zu einer Verpackungsmaschine, gelöst, wobei die Vorrichtung umfasst:
- einen ersten Förderer, der die Produkte in einer ersten Förderrichtung transportiert,
- einen an den ersten Förderer anschliessenden zweiten Förderer mit gleicher Transportrichtung, wobei der zweite Förderer zwei seitlich nebeneinander angeordnete Förderbänder hat, die wahlweise mit gleicher oder unterschiedlicher Geschwindigkeit antreibbar sind, um die Produkte zu drehen,
- eine in einer Horizontalebene gebogenen Führung geführte, oberhalb der Förderebene des zweiten Förderers angeordnete, endlose Förderkette, von der in regelmässigen Abständen Mitnehmer zum Erfassen der Produkte abstehen und
- einen an die Förderkette anschliessenden dritten Förderer, wobei die Produkte durch die Förderkette vom zweiten Förderer zum dritten Förderer gefördert werden.

Nachfolgend wird ein Ausführungsbeispiel der Erfindung anhand der Zeichnungen erläutert. Darin zeigt:
- Figur 1: eine schematische Draufsicht auf eine erfindungsgemässe Vorrichtung,
- Figur 2: einen Querschnitt durch den Kettenförderer,
- Figur 3: eine Draufsicht auf ein Detail des Kettenförderers, und
- Figuren 4 -7: verschiedene Anordnungen der Vorrichtung mit unterschiedlicher Betriebsweise.

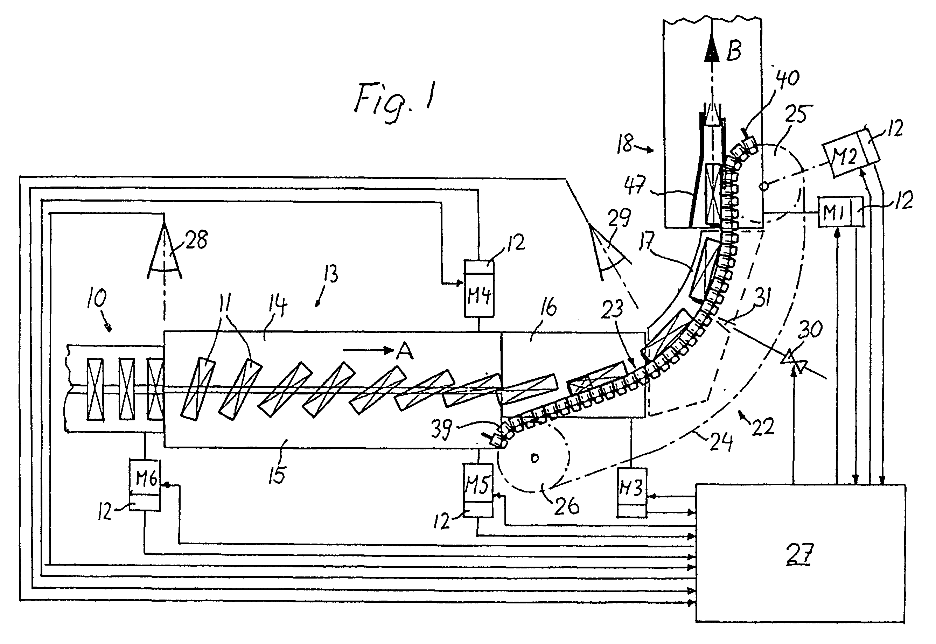

Die Vorrichtung nach Figur 1 umfasst ein erstes Förderband 10, auf dem rechteckige Produkte 11, z.B. zu verpackende Schokoladenriegel mit ihrer Längsachse quer zur Transportrichtung A angeliefert werden. Das Förderband 10 wird durch einen Servomotor M6 mit Winkelgeber 12 angetrieben. Vom Förderband 10 werden die Produkte 11 einem zweiten Förderer 13 übergeben, der aus zwei seitlich nebeneinander angeordneten Förderbändern 14, 15 besteht. Diese sind durch separate Servomotoren M4, M5 mit Winkelgebern 12 angetrieben. Am stromabwärtigen Ende schliesst an den Förderer 13 ein Zwischenförderband 16 an, das schmaler ist als das Band 10 und der Förderer 13. Die Förderrichtung A der Bänder 10, 14, 15, 16 ist gleich. Vom Band 16 gelangen die Produkte 11 auf ein Gleitblech 17 und von dort auf einen dritten Förderer 18, der ein Förderband oder eine Förderkette mit Mitnehmern sein kann, welche die Produkte 11 einer nicht dargestellten Verpakkungsmaschine zuführen. Der Förderer 18 und das Band 16 sind ebenfalls durch separate Servomotoren M1, M3 mit Winkelgebern 12 gesteuert.

Ein Kettenförderer 22 fördert die Produkte 11 vom Band 16 über die Gleitplatte 17 zum Förderer 18. Der Kettenförderer 22 ist oberhalb des Bandes 16, der Gleitplatte 17 und des Förderers 18 angeordnet. Auf seiner Arbeitsstrecke 23 läuft die Kette 24 des Förderers 22 in einer in einer Horizontalebene gekrümmten Führungsbahn. An den beiden Enden der Arbeitsstrecke 23 ist die Kette 24 über je ein Kettenrad 25, 26 geführt, von denen das eine mit einem Servomotor M2 mit Winkelgeber 12 angetrieben ist. Alle Motoren M und Geber 12 sind mit einer Steuereinrichtung 27 verbunden. Ebenso ein Fühler 28 am stromabwärtigen Ende des Bandes 10 und ein Fühler 29 über der Gleitplatte 17, welche die korrekte Position der Produkte im Förderer 22 misst und bei unkorrekter Position oder fehlerhaften Produkten über die Steuereinrichtung 27 ein Ventil 30 betätigt. Das Ventil 30 ist mit einer Druckluftquelle und einer Blasdüse 31 verbunden, welche falsch orientierte oder fehlerhafte Produkte 11 von der Gleitplatte 17 wegbläst.

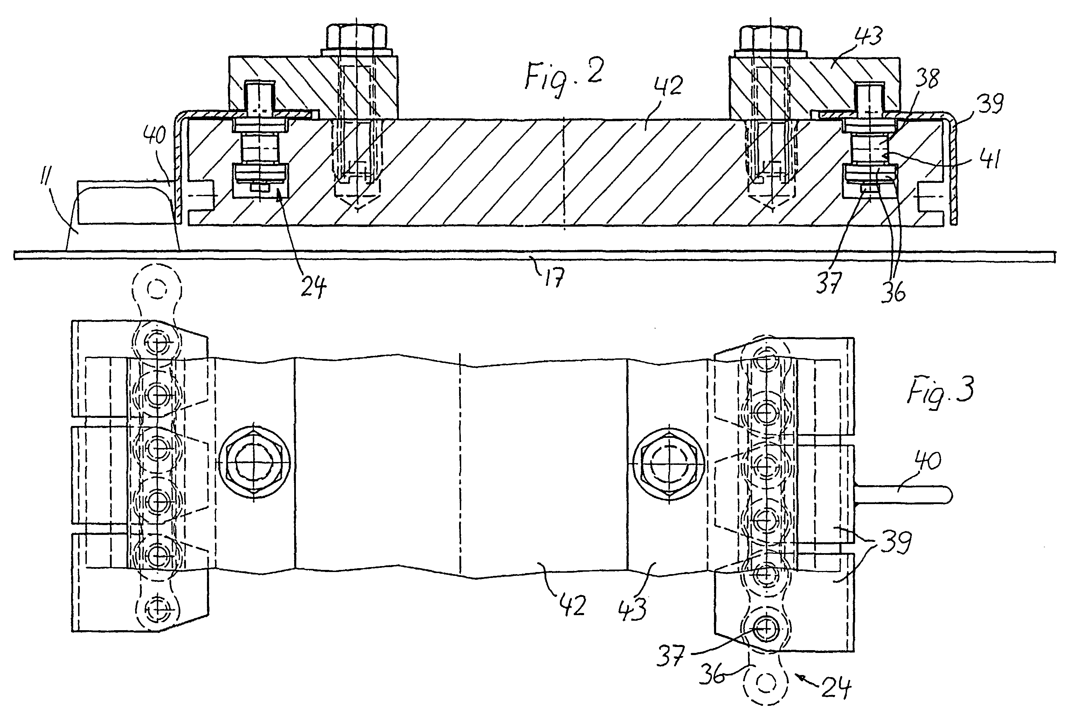

In Figuren 2 und 3 ist ein Ausschnitt aus dem Kettenförderer 22 detaillierter dargestellt. Die endlose Kette 24 des Förderers 22 besteht aus Kettengliedern 36 und Gelenkbolzen 37. Auf jeden Bolzen 37 ist zwischen den achsial beabstandeten Kettengliedern 36 eine Rolle 38 drehbar gelagert. Auf jeweils zwei benachbarten Bolzen 37 sind von oben L-förmig abgebogene Leitbleche 39 aufgesteckt. In regelmässigen Abständen steht von jeweils einem der Leitbleche 39 senkrecht nach aussen ein Mitnehmer 40 ab. Die Rollen 38 rollen in einer geschlossenen, über die Arbeitsstrekke 23 horizontal gekrümmten Führungsbahn 41 ab, welche in einer Trägerplatte 42 als T-Nut ausgebildet ist. Zur Führung der Leitbleche 39 ist auf die Platte 42 eine abgestufte Führungsplatte 43 aufgeschraubt.

Bei Bedarf sind die Förderbänder 10, 14, 15, 16 gelocht. Unterhalb der Arbeitsstrecke dieser Bänder können Absaugschächte angeordnet sein, damit die Produkte 11 den gesteuerten Bewegungen besser folgen, wie dies in der US-A-4 815 581 erläutert ist.

Die beschriebene Vorrichtung arbeitet wie folgt, wobei zunächst auf Figur 1 Bezug genommen wird. Auf dem ersten Förderband 10 werden die Produkte 11 mit ihrer Längsachse quer zur Transportrichtung A transportiert. Die Bänder 14, 15 laufen mit konstanter aber ungleicher Geschwindigkeit. Dadurch werden die Produkte 11 so gedreht, dass ihre Längsachse einen spitzen Winkel mit der Transportrichtung A bildet. Das Band 16 läuft ebenfalls konstant und mit höherer Geschwindigkeit als das Band 14, damit zwischen den Produkten 11 ein gleichmässiger und/oder grösserer Abstand gebildet wird. Die Kette 24 wird durch den Motor M2 ebenfalls konstant angetrieben. Das Band 10 wird nun durch den Fühler 28 und die Drehwinkelgeber 12 der Motoren M2, M3, M4, M5 über die Steuereinrichtung 27 so getaktet eingeschaltet, dass die Produkte 11 auf dem Band 16 an der Arbeitsstrecke 23 der Kette 24 unmittelbar vor einem Mitnehmer 40 eintreffen. Die Mitnehmer 40 und die Leitbleche 39 richten dabei die Produkte 11 mit ihrer Längsachse in Transportrichtung B des Förderers 18 aus, die im dargestellten Beispiel um 90° geneigt zur Transportrichtung A ist. Das über das stromaufwärtige Ende des Förderers 18 ragende Ende der Arbeitsstrecke 23 ist unmittelbar vor dem Rad 25 parallel zur Richtung B. Vorzugsweise weicht diese Richtung B um weniger als 20° gegenüber der Tangente an das Ende der Arbeitsstrecke 23 ab. Am stromaufwärtigen Ende dagegen ist die Arbeitsstrecke 23 stärker gegenüber der Richtung A geneigt, damit die Produkte sicherer zwischen den Mitnehmern 40 erfasst werden. Beim Einlauf in den Förderer 18 können noch zusätzliche Führungsbleche 47 angeordnet werden.

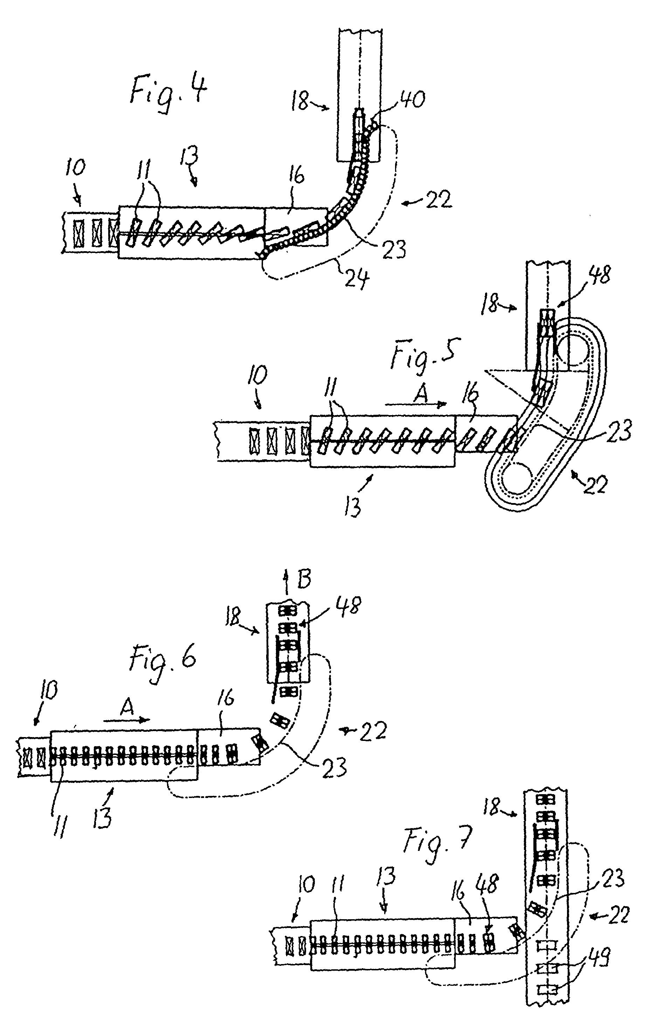

Figur 4 entspricht einer vereinfachten Darstellung der Vorrichtung nach Figur 1. In Figuren 5 bis 7 sind andere Betriebsweisen der Vorrichtung gezeigt, wobei analoge Teile mit gleichen Bezugszeichen versehen sind.

Mit der Vorrichtung können auch Zweiergruppen oder Mehrfachgruppen 48 von Produkten 11 auf dem Kettenförderer 22 gebildet werden. Figur 5 zeigt eine solche Variante, bei welcher die Produkte 11 so auf den Förderer 13 aufgetaktet werden, dass bei der Förderkette 24 jeweils zwei Produkte 11 vor einem Mitnehmer 40 aufeinandertreffen und durch diesen Mitnehmer 40 gemeinsam auf den Förderer 18 geschoben werden. Dazu bildet die Arbeitsstrekke 23 am stromaufwärtigen Ende einen grösseren Winkel (etwa 60°) mit der Förderrichtung A der Förderer 13, 16. Unter Umständen wird auch der Kettenförderer 22 getaktet.

Bei der Variante nach Figur 6 ist das stromaufwärtige Ende der Arbeitsstrecke 23 des Kettenförderers 22 annähernd parallel zur Förderrichtung A. Die Bänder 14, 15 laufen gleich schnell, so dass die Produkte 11 nicht gedreht werden. Es werden ebenfalls wieder Zweiergruppen 48 gebildet, welche mit den Längsachsen der Produkte 11 quer zur Transportrichtung B des Förderers 18 auf diesen übergeben werden.

Figur 7 zeigt eine Variante der Ausführungsform nach Figur 6, bei welcher stromaufwärts des Förderers 18 eine Einrichtung zur Zuführung von Kartonzuschnitten 49 von der Grösse des Grundrisses der Zweiergruppen 48 angeordnet ist. Der Förderer 18 ist dazu ein Förderband, das stromaufwärts über die Achse der Förderer 10, 13, 16 verlängert ist. Das nicht dargestellte Gleitblech 17 ist dünn und mit etwas Abstand oberhalb des Bandes 18 angeordnet. Die Zuschnitte 49 werden auf das Band 18 so aufgetaktet, dass sie unter dem Gleitblech 17 hindurch an dessen stromabwärtigem Ende jeweils gleichzeitig mit einer Zweiergruppe 48 eintreffen, welche dann auf diesen Zuschnitt 49 aufgeschoben wird. Die Zweiergruppen 48 werden in der Verpackungsmaschine gemeinsam mit den Zuschnitten 49 verpackt.

Die beschriebene Vorrichtung ermöglicht eine sehr flexible Anwendung. Die Produkte 11 können von quer auf längs gedreht oder mit gleicher Orientierung dem Förderer 18 übergeben werden. Die Vorrichtung eignet sich auch zum Gruppieren von Produkten 11. Der Anbauwinkel kann in weiten Grenzen gewählt werden. Es ist auch eine gleichzeitige Kartonzuführung möglich. Rechteckige Produkte können genau orientiert in die Verpackungsmaschine eingeführt werden. Die Vorrichtung hat einen geringen Platzbedarf, eine hohe Leistung, ist betriebssicher und einfach im Unterhalt. Die Teilung der Mitnehmer 40 kann sehr einfach durch Umstecken der Leitbleche 39 geändert werden. Dadurch ist die Vorrichtung einfach an andere Produktlängen anpassbar. Weil die Kettenlänge ein ganzzahliges Vielfaches der Teilung sein muss, ist es dazu zweckmässig, das stromaufwärtige Kettenrad 26 parallel zur Richtung der Arbeitsstrecke an ihrem stromaufwärtigen Ende verstellbar zu montieren. Damit kann die Kettenlänge durch Einsetzen oder Entfernen einer entsprechenden, geradzahligen Anzahl Kettenglieder angepasst werden. In die Trägerplatte 42 und die Führungsplatte 43 werden dann entsprechende Zwischenstücke von der Breite eines ganzzahligen Vielfachen der Kettenteilung eingesetzt. Die Trägerplatte 42 und die Führungsplatten 43 können in Segmente unterteilt sein, die stirnseitig zusammengesetzt sind. In diesem Fall lässt sich die Form des Kettenförderers, das heisst z.B. der Ablenkwinkel, durch Ersetzen von geradliegenden durch gekrümmte Segmente oder umgekehrt dem Bedarf anpassen.

## Patentansprüche

1. Vorrichtung zum Ausrichten von im Grundriss annähernd rechteckigen Produkten (11), insbesondere Schokoladenriegeln, und Zufuhr der Produkte (11) zu einer Verpackungsmaschine, umfassend
- einen ersten Förderer (10), der die Produkte (11) in einer ersten Förderrichtung (A) transportiert,
- einen an den ersten Förderer (10) anschliessenden zweiten Förderer (13) mit gleicher Transportrichtung (A), wobei der zweite Förderer (13) zwei seitlich nebeneinander angeordnete Förderbänder (14, 15) hat, die wahlweise mit gleicher oder unterschiedlicher Geschwindigkeit antreibbar sind, um die Produkte (11) zu drehen.
- eine in einer in einer Horizontalebene gebogenen Führung (41) geführte, oberhalb der Förderebene des zweiten Förderers (13) angeordnete, endlose Förderkette (24), von der in regelmässigen Abständen Mitnehmer (40) zum Erfassen der Produkte (11) abstehen, und
- einen an die Förderkette (24) anschliessenden dritten Förderer (18), wobei die Produkte (11) durch die Förderkette (24) vom zweiten Förderer (13) zum dritten Förderer (18) gefördert werden.

2. Vorrichtung nach Anspruch 1, wobei am stromabwärtigen Ende des ersten Förderers (10) ein erster Fühler (28) angeordnet ist, und wobei der erste Förderer (10) getaktet durch Signale des Fühlers (28) derart angetrieben ist, dass die Produkte (11) auf dem zweiten Förderer (13) einen regelmässigen Abstand aufweisen, der mit dem Umlauf der Mitnehmer (40) synchronisiert ist.

3. Vorrichtung nach Anspruch 1 oder 2, wobei zwischen dem zweiten und dritten Förderer (13, 18) eine Gleitplatte (17) und oberhalb der Gleitplatte (17) ein zweiter Fühler (29) zum Überwachen der Produkte (11) angeordnet ist, der mit einer. Ausstosseinrichtung (30, 31) zum Ausstossen von fehlerhaften Produkten (11) von der Gleitplatte (17) verbunden ist.

4. Vorrichtung nach Anspruch 3, wobei die Länge der Gleitplatte (17) in Transportrichtung mindestens so gross ist wie die Mitnehmerteilung.

5. Vorrichtung nach Anspruch 3 oder 4, wobei die Ausstosseinrichtung (30, 31) eine Blasdüse (31) umfasst, die über ein Ventil (30) an eine Druckluftquelle angeschlossen ist, und wobei das Ventil (30) durch den zweiten Fühler (29) gesteuert ist.

6. Vorrichtung nach einem der Ansprüche 1 bis 5, wobei die Förderrichtung (B) des dritten Förderers (18) von der Förderrichtung (A) des ersten und zweiten Förderers (10, 13) abweicht.

7. Vorrichtung nach einem der Ansprüche 1 bis 6, wobei stromabwärts des zweiten Förderers (13) ein Zwischenförderer (16) angeordnet ist, auf welchem die Produkte (11) durch die Mitnehmer (40) erfasst werden.

8. Vorrichtung nach einem der Ansprüche 1 bis 7, wobei der zweite Förderer (13) vor der Mittelachse des dritten Förderers (18) endet.

9. Vorrichtung nach einem der Ansprüche 1 bis 8, wobei stromaufwärts des dritten Förderers (18) eine Einrichtung zum Zuführen von Kartonzuschnitten (49) angeordnet ist.

10. Vorrichtung nach einem der Ansprüche 1 bis 9, wobei der erste und der zweite Förderer (10, 13) eine Luftabsaugung aufweisen.

## Revendications

1. Dispositif d'alignement de produits (11) à section approximativement rectangulaire, notamment des tablettes de chocolat, et pour l'acheminement des produits (11) à une machine d'emballage, comprenant
- un premier convoyeur (10) qui transporte les produits (11) dans une première direction de transport (A),
- un deuxième convoyeur (13) raccordé au premier convoyeur (10), avec la même direction de transport (A), le deuxième convoyeur (13) ayant deux bandes transporteuses (14, 15) disposées latéralement l'une à côté de l'autre, qui peuvent être entraînée de manière sélective à la même vitesse ou à des vitesses différentes, afin de tourner les produits (11),
- une chaîne de transport (24) sans fin, guidée dans un guide (41) courbé dans le plan horizontal, disposée au-dessus du plan de transport du deuxième convoyeur (13), de laquelle dépassent à intervalles réguliers des dispositifs d'entraînement (40) pour saisir les produits (11), et
- un troisième convoyeur (18) raccordé à la chaîne de transport (24), les produits (11) étant transportés par la chaîne de transport (24) depuis le deuxième convoyeur (13) jusqu'au troisième convoyeur (18).

2. Dispositif selon la revendication 1, dans lequel un premier palpeur (28) est disposé à l'extrémité aval du premier convoyeur (10), et dans lequel le premier convoyeur (10) est entraîné de manière cadencée par les signaux du palpeur (28) de telle sorte que les produits (11) présente sur le deuxième convoyeur (13) un espacement régulier qui est synchronisé avec la rotation du dispositif d'entraînement (40).

3. Dispositif selon la revendication 1 ou 2, dans lequel une plaque de glissement (17) est disposée entre le deuxième et le troisième convoyeur (13, 18) et un deuxième palpeur (29) est disposé au-dessus de la plaque de glissement (17) pour surveiller les produits (11), ce dernier étant connecté à un dispositif d'éjection (30, 31) pour éjecter les produits défectueux (11) de la plaque de glissement (17).

4. Dispositif selon la revendication 3, dans lequel la longueur de la plaque de glissement (17) dans la direction de transport est au moins aussi grande que l'écartement du dispositif d'entraînement.

5. Dispositif selon la revendication 3 ou 4, dans lequel le dispositif d'éjection (30, 31) comprend une buse soufflante (31) qui est raccordée à une source d'air sous pression par le biais d'une soupape (30), la soupape (30) étant commandée par le deuxième palpeur (29).

6. Dispositif selon l'une quelconque des revendications 1 à 5, dans lequel la direction de transport (B) du troisième convoyeur (18) s'écarte de la direction de transport (A) du premier et du deuxième convoyeur (10, 13).

7. Dispositif selon l'une quelconque des revendications 1 à 6, dans lequel en aval du deuxième convoyeur (13) est disposé un convoyeur intermédiaire (16) sur lequel les produits (11) sont saisis par le dispositif d'entraînement (40).

8. Dispositif selon l'une quelconque des revendications 1 à 7, dans lequel le deuxième convoyeur (13) se termine avant l'axe médian du troisième convoyeur (18).

9. Dispositif selon l'une quelconque des revendications 1 à 8, dans lequel en amont du troisième convoyeur (18) est disposé un dispositif pour l'acheminement de pièces de carton découpées (49).

10. Dispositif selon l'une quelconque des revendications 1 à 9, dans lequel le premier et le deuxième convoyeur (10, 13) présentent une aspiration d'air.

## Claims

1. Apparatus for aligning products (11) of more or less rectangular outline, in particular chocolate bars, and supplying the products (11) to a packing machine, comprising
- a first conveyor (10), which transports the products (11) in a first conveying direction (A),
- a second conveyor (13), which adjoins the first conveyor (10) and has the same transporting direction (A), the second conveyor (13) having two conveying belts (14, 15) which are arranged laterally alongside one another and can be driven optionally at the same speed or at different speeds in order to rotate the products (11),
- an endless conveying chain (24) which is guided in a guide (41) curved in a horizontal plane, is arranged above the conveying plane of the second conveyor (13) and from which carrier elements (40) for catching the products (11) project at regular intervals, and
- a third conveyor (18), which adjoins the conveying chain (24), the products (11) being conveyed from the second conveyor (13) to the third conveyor (18) by the conveying chain (24).

2. Apparatus according to Claim 1, a first sensor (28) being arranged at the downstream end of the first conveyor (10), and the first conveyor (10) being driven cyclically by signals of the sensor (28) such that the products (11) on the second conveyor (13) are spaced apart by a regular spacing which is synchronized with the circulation of the carrier elements (40).

3. Apparatus according to Claim 1 or 2, a slide plate (17) being arranged between the second and third conveyors (13, 18) and a second sensor (29) for monitoring the products (11) being arranged above the slide plate (17), this sensor being connected to an ejecting means (30, 31) for ejecting defective products (11) from the slide plate (17).

4. Apparatus according to Claim 3, the length of the slide plate (17) in the transporting direction being at least equal to the spacing between carrier elements.

5. Apparatus according to Claim 3 or 4, the ejecting means (30, 31) comprising a blowing nozzle (31) which is connected to a compressed-air source via a valve (30), and the valve (30) being controlled by the second sensor (29).

6. Apparatus according to one of Claims 1 to 5, the conveying direction (B) of the third conveyor (18) differing from the conveying direction (A) of the first and second conveyors (10, 13).

7. Apparatus according to one of Claims 1 to 6, an intermediate conveyor (16) being arranged downstream of the second conveyor (13), and the products (11) being caught by the carrier elements (40) on this intermediate conveyor.

8. Apparatus according to one of Claims 1 to 7, the second conveyor (13) terminating before the centre axis of the third conveyor (18).

9. Apparatus according to one of Claims 1 to 8, a device for supplying cardboard blanks (49) being arranged upstream of the third conveyor (18).

10. Apparatus according to one of Claims 1 to 9, the first and the second conveyors (10, 13) having an air suction-extraction means.
